# EUROPÄISCHE PATENTSCHRIFT

(11) **EP 3 703 206 B1**
(45) Veröffentlichungstag und Bekanntmachung des Hinweises auf die Patenterteilung: **30.06.2021**
(21) Anmeldenummer: 20158372.1
(22) Anmeldetag: 20.02.2020
(51) Int. Cl.: H02G 3/08, H02G 3/12, H02G 3/06, H02G 3/04

(54) **INSTALLATIONSDOSE SOWIE INSTALLATIONSEINHEIT MIT EINER SOLCHEN INSTALLATIONSDOSE UND MIT EINEM INSTALLATIONSROHR**
INSTALLATION BOX AND INSTALLATION UNIT WITH SUCH AN INSTALLATION BOX AND INSTALLATION PIPE
BOÎTE D'INSTALLATION AINSI QU'UNITÉ D'INSTALLATION DOTÉE D'UNE TELLE BOÎTE D'INSTALLATION ET D'UN TUYAU D'INSTALLATION

(30) Priorität: 27.02.2019 DE 202019101118 U
(43) Veröffentlichungstag der Anmeldung: 02.09.2020
(73) Patentinhaber: OBO Bettermann Hungary Kft., 2347 Bugyi (HU)
(72) Erfinder: HARMS, Heiko, 58708 Menden (DE); KOLERT, Sergej, 58119 Hagen (DE)
(74) Vertreter: Haverkamp, Jens

(56) Entgegenhaltungen:
- EP-A1- 3 540 885
- EP-A2- 2 360 800
- FR-A1- 3 011 139
- Annonymous: "NOUVEAU BOÎTES D'ENCASTREMENT ÉTANCHES À L'AIR POUR CLOISONS CREUSES", , 20. Oktober 2017 (2017-10-20), XP055696198, Gefunden im Internet: URL:https://www.bticino.be/sites/default/f iles/brochures/brochure_luchtdichte_inbouw dozen_holle_wanden_FR_v2.pdf [gefunden am 2020-05-18]
- Blm: "BOITIER MULTIMAT NO AIR II", , 28 August 2020 (2020-08-28), XP055778171, Retrieved from the Internet: URL:https://damrexelprod.blob.core.windows .net/medias/0e67fd37-9140-42b4-88c4-0d9bb1 ac7dcd [retrieved on 2021-02-22]
- Anonymous: "Catalogue Bâtiment Habitat et tertiaire", BLM, 1 January 2017 (2017-01-01), pages 1-48, XP055756970, Retrieved from the Internet: URL:https://www.blmd.fr [retrieved on 2020-12-07]

## Beschreibung

Die Erfindung betrifft eine Installationsdose gemäß Anspruch 1.

Installationsdosen werden für die Installation von elektrischen und/oder elektronischen Geräten in Gebäuden eingesetzt. Bei derartigen Installationsdosen handelt es sich typischerweise um Hohlwanddosen, mithin um Installationsdosen, die unter Putz montiert werden. Derartige Installationsdosen verfügen über einen Dosenkörper, der durch einen Boden, eine umlaufende Wand und eine dem Boden gegenüberliegende Montageöffnung gebildet ist. Die Montageöffnung stellt diejenige Öffnung des Dosenkörpers dar, durch die die elektrischen/elektronischen Geräte darin eingesetzt werden. Auch wird über die Montageöffnung die Verkabelung innerhalb der Installationsdose und somit zu den von dieser abgehenden Leitungen vorgenommen. Als elektrische/elektronische Installationsgeräte kommen Steckdosen, Geräteträger, elektrische/elektronische Schaltgeräte, wie beispielsweise Dimmer oder dergleichen in Frage. An den Dosenkörper ist an seinen die Montageöffnung einfassenden Wandabschnitt ein in radialer Richtung nach außen vorspringender Stützflansch angeformt. Dieser dient zur Begrenzung der Einsetztiefe der Hohlwanddose, wenn diese in ein in eine Gebäudewand angebrachtes Dosenloch eingesetzt wird. Festgesetzt wird eine solche als Hohlwanddose ausgeführte Installationsdose in der wandseitigen Dosenöffnung mittels in radialer Richtung ausstellbarer Klemmkörper.

In dem Dosenkörper sind Rohreinführungen zum Ein- bzw. Herausführen von Leitungen in den durch den Dosenkörper bereitgestellten Installationshohlraum hinein bzw. aus diesem heraus vorgesehen. Diese Öffnungen dienen ebenfalls zum Anschließen von Installationsrohren, beispielsweise Kunststoffwellschläuchen, in denen ein oder mehrere Kabel geführt sind.

Derartige als Hohlwanddosen ausgelegte Installationsdosen werden auch in Trockenbauwänden verbaut. Bei einem solchen Anwendungsfall ist vielfach gefordert, dass die durch die Wand bereitgestellte Winddichtigkeit zwischen zwei Räumen durch den Einbau von derartigen Installationsdosen, wenn diese von gegenüberliegenden Seiten in eine solche Trockenbauwand eingesetzt werden, nicht nachteilig beeinflusst wird. Bei Installationsdosen, bei denen es nicht auf eine Wind- und Rauchdichtigkeit ankommt, können die Rohreinführungen durch Ausbrechteile vorbereitet sein. Bei diesen Ausbrechteilen handelt es sich um Kunststoffteile aus demselben Material wie der Dosenkörper selbst, und zwar Hartkunststoff, die mit Abbrechstegen mit dem eine solche Rohreinführung umgebenden Material des Dosenkörpers verbunden sind. Je nach Bedarf werden dann die erforderlichen Rohreinführungen durch Ausbrechen eines solchen Ausbrechteils geöffnet. Bei winddicht ausgeführten Installationsdosen ist jede Rohreinführung mit einer Weichkunststoffmembran überspannt, so dass diese bei Nichtbenutzung geschlossen ist. In dem die Rohreinführung überspannenden Teil der Weichkunststoffmembran befindet sich gemäß einer vorbekannten Ausgestaltung ein Ringwulst, der die Position definiert, an der eine Leitung oder ein Installationsrohr eingeführt werden kann. Hierzu wird der innerhalb des Ringwulst befindliche Membranbereich eingerissen, typischerweise durch Eindrücken dieses Membranbereiches mit der Stirnseite der darin einzuführenden Leitung oder der Stirnseite eines darin einzuführenden Installationsrohres. Bei dem Vorgang des Einreißens dieses Weichkunststoffmembranbereiches kann es vorkommen, dass Risse sich unkontrolliert ausbreiten mit der Folge, dass dabei bei einer darin eingeführten Leitung oder einem darin eingeführten Installationsrohr die gewünschte Winddichtigkeit nicht mehr gewährleistet ist.

Aus dem Stand der Technik sind Hohlwanddosen bekannt, bei denen an den Einreißbereich eine Handhabungslasche angeformt ist. Bei einer solchen vorbekannten Hohlwanddose befindet sich diese Handhabungslasche zentrisch innerhalb des Einreißbereiches. Zum Öffnen muss die Handhabungslasche manuell ergriffen und an dieser gezogen werden, bis der Einreißbereich entfernt ist. Mitunter muss zum Ausreißen des Einreißbereiches eine gewisse Kraft aufgewendet werden. Bei nicht ausreichender Sorgfalt beim Ausreißen des Einreißbereiches können den Wulst durchgreifende Risse entstehen, was die Dichtigkeit eines in die geschaffene Öffnung eingesetzten Installationsrohres beeinträchtigt.

Gemäß einer anderen Ausgestaltung ist unmittelbar angrenzend und dem Verlauf der Einreißkontur folgend, eine Einreißhandhabe an den Einreißbereich angeformt. Durch diese Anordnung wird die manuell angelegte Einreißkraft beginnend in einem Scheitelbereich des an den Wulst grenzenden Einreißbereiches angelegt, weshalb der Ort einer Rissinitiierung definierter als bei anderen Hohlwanddosen ist.

Die nachveröffentlichte europäische Patentanmeldung 3 540 885 A1 offenbart eine Installationsdose mit den Merkmalen des Oberbegriffs des Anspruchs 1. Die eine Rohreinführung überspannende Weichkunststoffmembran trägt außenseitig eine Einreißhandhabe. Die Einreißhandhabe ist durch eine als Materialverdünnung ausgeführte Einreißkontur an einen den Einreißbereich umlaufend begrenzenden Wulst angeformt. Die Einreißhandhabe selbst ist ungekrümmt ausgeführt.

EP 2 360 800 A2 offenbart eine Installationsdose, in deren Wandung mindestens eine durch eine Sollbruchstelle umgrenzter Wandungsbereich vorgesehen ist, der nach Herausbrechen einen Einlass oder Durchlass für ein Leerrohr bildet. Dieser Wandungsbereich trägt eine Eingriffskontur für ein Werkzeug, etwa die Klinge eines Schraubendrehers, mit dem der Wandungsbereich ausgebrochen werden kann. Diese Installationsdose ist einstückig aus einem formstabilen Kunststoff geformt. Zum Herausbrechen des Wandungsteils lehrt dieser Stand der Technik, dass dieser Wandungsbereich eine Versteifung aufweist, mittels derer die Wirkkraft des Werkzeuges in der Eingriffslage auf einen möglichst großen Bereich des Wandungsbereichs verteilt wird.

Eine weitere Hohlwanddose mit einer Weichkunststoffmembran überspannten Dosenöffnungen ist aus FR 3 011 139 A1 bekannt. Die Einreißhandhabe ist gekrümmt und befindet sich mittig innerhalb des Einreißbereiches.

Nachteilig bei diesen Hohlwanddosen mit Einreißhandhaben zum Ausreißen des Einreißbereiches ist, dass es erforderlich ist, zunächst die Installationsöffnungen durch Ausreißen des Einreißbereiches manuell zu öffnen. Erst dann kann in die geschaffene Öffnung das gewünschte Installationsrohr oder das darin einzuführende Kabel hindurchgedrückt werden.

Ausgehend von diesem diskutierten Stand der Technik liegt der Erfindung daher die Aufgabe zugrunde, eine Installationsdose der vorstehend beschriebenen Art dergestalt weiterzubilden, dass sich diese insbesondere auch als Hohlwanddose eignet und den Anforderungen an eine Winddichtigkeit genügt, wenn in eine Rohreinführung ein Installationsrohr, insbesondere ein Wellrohr oder Wellschlauch als typische Leerrohre bei elektrischen Gebäudeinstallationen eingesetzt ist und das in seiner Handhabung gegenüber vorbekannten Hohlwanddosen dieser Art vereinfacht ist.

Gelöst wird diese Aufgabe erfindungsgemäß durch eine eingangs genannte, gattungsgemäße Installationsdose, bei der die Einreißkontur durch eine Materialverdünnung bereitgestellt ist und bei der die Betätigungsfläche der Einreißhandhabe außermittig bezüglich des von dem Wulst eingefassten Einreißbereiches in denjenigen Abschnitt des Einreißbereiches versetzt, in den die konkave Kontur der Einreißhandhabe weist, angeordnet ist und sich die Einreißhandhabe bis an die Einreißkontur heran erstreckt und bei der der Steg an seiner der Betätigungsfläche gegenüberliegenden Seite über wenigstens eine Abstützstruktur an der äußeren Oberfläche des Einreißbereiches der Weichkunststoffmembran abgestützt ist.

Bei dieser Installationsdose ist durch einen Wulst ein Einreißbereich eingefasst. Bei diesem handelt es sich um denjenigen Bereich bzw. Abschnitt der Weichkunststoffmembran, der aus dieser zum Bereitstellen einer Öffnung zum Einführen einer Leitung oder eines Installationsrohres entfernt wird. Der Wulst befindet sich radial außenseitig bezüglich des Einreißbereiches. Eine Rissausbreitung innerhalb dieses von dem Wulst eingefassten Einreißbereiches in radialer Richtung nach außen ist durch den Wulst in Folge seiner Materialverdickung gegenüber der Materialstärke des Einreißbereiches begrenzt. Als Einreißkontur kann zwar die zum Einreißbereich weisende Seite des Wulstes dienen. Vorgesehen ist, dass die Einreißkontur zusätzlich durch eine Materialverdünnung bereitgestellt ist, die den Einreißbereich einfasst. Bei einer solchen Ausgestaltung kann der Einreißbereich der Weichkunststoffmembran mit einer größeren Materialstärke und damit stabiler ausgebildet sein. Zudem wird hierdurch der Ort einer Rissinitiierung durch die eine Sollbruchstelle bildende Einreißkontur vorgegeben.

Bei dieser Installationsdose als Teil einer Installationseinheit, umfassend eine solche Installationsdose und ein darin durch eine Rohreinführung einzusetzendes Installationsrohr, ist zudem die Querschnittsfläche des von der Einreißkontur eingefassten Einreißbereiches kleiner als die Querschnittsfläche eines darin einzuführenden Installationsrohres. Dieses hat zur Folge, dass ein in die durch Entfernen des Einreißbereiches bereitgestellte Öffnung eingestecktes Installationsrohr darin nur unter Aufweitung des Wulstes möglich ist. Ausgenutzt wird hierbei die Elastizität einer solchen Weichkunststoffmembran. Ist das Installationsrohr in die Rohreinführung eingesetzt, liegt der Wulst an der Mantelfläche des Installationsrohres unter Vorspannung an, was zur Winddichtigkeit eines an eine solche Installationsdose angeschlossenen Installationsrohres beiträgt.

Von Besonderheit bei dieser Installationsdose ist, dass der Einreißbereich der eine Rohreinführung überspannenden Weichkunststoffmembran eine nach außen abragende Einreißhandhabe trägt. Die Einreißhandhabe dient zum Einleiten einer definierten Kraft - eine Einreißkraft - in den Einreißbereich, so dass auf diese Weise der Einreißbereich durch definiertes Einreißen der Weichkunststoffmembran entlang der Einreißkontur erfolgt. Ein definiertes Einreißen der Weichkunststoffmembran entlang der Einreißkontur gewährleistet nicht nur eine besondere Winddichtigkeit der durch Entfernen des Einreißbereiches bereitgestellten Öffnung gegenüber der Mantelfläche eines darin eingesetzten Installationsrohres, sondern stellt zugleich eine weitere Gewähr dafür dar, dass eine Rissausbildung auf den Bereich der Einreißkontur beschränkt bleibt, eine Rissausbildung jedenfalls nicht durch den die Einreißkontur einfassenden Wulst in radialer Richtung nach außen stattfindet. Grund hierfür ist, dass sich der Riss parallel zu der Erstreckung des Wulstes ausbildet und nicht in einer Querrichtung dazu.

Für die gewünschte definierte Rissinitiierung innerhalb der Einreißkontur erstreckt sich die Einreißhandhabe bis in den Bereich der Einreißkontur. Auf Grund der konkaven Krümmung und der außermittigen Anordnung der Betätigungsanhabe in Richtung zu dem gewünschten Ort der Rissinitiierung verläuft die Kontur der Einreißhandhabe gegensinnig zu der Kontur des Wulstes bzw. der dem Verlauf des Wulstes folgenden Einreißkontur. Eine auf die Betätigungsfläche der Einreißhandhabe aufgebrachte Kraft quer zur Ebene des Einreißbereiches, und zwar mit Wirkrichtung zum Scheitel der gekrümmten Betätigungsfläche der Einreißhandhabe, wird durch diese an die Einreißkontur weitergeleitet, da auf Grund der Materialstärke der Einreißhandhabe diese sich bei der anliegenden Kraft nicht, jedenfalls nicht nennenswert dehnt. Eine Rissinitiierung innerhalb der Einreißkontur erfolgt dadurch in diesen Bereichen, die sich benachbart zu den Endabschnitten der Einreißhandhabe befinden. Mithin wird bei Anliegen einer entsprechenden Zugkraft, wie vorbeschrieben, eine Rissinitiierung in demjenigen Abschnitt der Einreißkontur stattfinden, der sich von dem einem Endabschnitt der Einreißhandhabe zu dem anderen Ende derselben erstreckt.

Bei der Einreißhandhabe stellt dessen eine Flachseite, und zwar die zu dem kleineren Einreißbereichteil weisende Seite, eine Betätigungsfläche dar, auf die zum Heraustrennen des Einreißbereiches die erforderliche Kraft aufgebracht wird. Aus diesem Grunde befindet sich die Betätigungsfläche zum Empfangen einer zum Einreißen der Einreißkontur erforderlichen Kraft quer zu der angreifenden Öffnungskraft bzw. Einreißkraft. Die Einreißkraft wird manuell aufgebracht, etwa durch Ergreifen eines solchen Steges mit zwei Fingern und Bewegen bzw. Verstellen desselben zum Erzeugen der gewünschten Zugspannung. Auf Grund der vorbeschriebenen Geometrie der Einreißhandhabe mit ihrer konkav gekrümmten Betätigungsfläche kann die erforderliche Kraft zum Heraustrennen des Einreißbereiches allerdings auch mit einem darin einzusetzenden manuell gehandhabten Installationsrohr als Öffnungswerkzeug vorgenommen werden. Hat man mit dem Ende des Installationsrohres den Einreißbereich herausgetrennt oder zumindest soweit eingerissen, dass dieser zum Einführen des Installationsrohres nach innen abgeklappt werden kann, wird das Installationsrohr mit seinem Endabschnitt durch die mit diesem geschaffene Öffnung durch die Weichkunststoffmembran hindurchgesteckt. Die konkave Krümmung der Betätigungsfläche verhindert ein seitliches Abrutschen des Installationsrohres bei Ausüben einer auf die Einreißhandhabe wirkenden Stellkraft. Der Krümmungsradius der Betätigungsfläche entspricht typischerweise zumindest in etwa dem Radius der Mantelfläche eines durch die Rohreinführung einzusetzenden Installationsrohres. An seiner der Betätigungsfläche gegenüberliegenden Seite ist die Einreißhandhabe an der Oberseite des Einreißbereiches durch Abstützstrukturen abgestützt. Hierdurch wird vermieden, dass bei einer Krafteinwirkung mittels eines Installationsrohres auf die Betätigungsfläche der Steg abknickt. Als Abstützstrukturen können beispielsweise ein oder mehrere Stützrippen, die sich zwischen der Unterseite eines solchen Steges und der Außenseite des Einreißbereiches der Weichkunststoffmembran dienen

Es hat sich interessanterweise gezeigt, dass eine Rissbildung in einer solchen Weichkunststoffmembran bei Anliegen einer Zugkraft sehr viel genauer definiert werden kann als bei Einwirken einer Kraft, die, wie beim Durchstoßen einer solchen Weichkunststoffmembran, quer zur Ebene der eine solche Rohreinführung überspannenden Weichkunststoffkomponente wirkt. Von besonderem Vorteil ist, dass der Einreißbereich mit dem Installationsrohr als Einreißwerkzeug entfernt werden kann, was die Handhabung zum Einführen eines Installationsrohres durch eine solche Weichkunststoffmembrane hindurch nicht nur vereinfacht, sondern auch den Montagevorgang beschleunigt.

Hat eine Rissinitiierung stattgefunden, pflanzt sich der Riss dorthin fort, wo gegenüber der anliegenden und über die Einreißhandhabe auf den Einreißbereich wirkenden Kraft der geringste Materialwiderstand ist. Dieses ist innenseitig bezüglich des Wulstes an der Einreißkontur der Fall. Ausgehend von dem bereits vorstehend beschriebenen Ort der Rissinitialisierung, pflanzt sich der Riss, begrenzt durch den Wulst innerhalb der Einreißkontur fort. Die zum Bewirken dieses Einreißens auf den Einreißbereich der Membran wirkende Kraft verläuft damit in Richtung der gewünschten Rissausbreitung, weshalb der Einreißbereich sehr sauber von dem den Einreißbereich einfassenden Wulst herausgetrennt werden kann. Dieses wirkt sich positiv auf die gewünschte Winddichtigkeit und eine definierte Anlage der durch Entfernen des Ausreißbereiches gebildeten Öffnungsrandbereiche an der Mantelfläche eines durch die Öffnung eingesetzten Installationsrohres aus. Aufgrund des vorbeschriebenen Kraftverlaufes der über die Einreißhandhabe in zwei Punkten in die Einreißkontur eingebrachte Kraft, die in Einreißrichtung und entlang des Verlaufes des Wulstes wirkt, ist zugleich einer Rissausbildung quer zum Verlauf des Wulstes und somit in radialer Richtung durch diesen hindurch wirksam entgegengewirkt. Unterstützt wird dieses dadurch, dass auf Grund der konkaven Wölbung der Betätigungsfläche der Einreißhandhabe diese mit einem Winkel von typischerweise zwischen 35 bis 55 Grad an die Einreißkontur grenzt und in Folge der von dem Wulst bzw. der Einreißkontur weg gerichteten Zugkraft. Der vorbeschriebene Winkel zwischen der Einreißhandhabe und dem Verlauf der Einreißkontur ist abhängig von dem Durchmesser des von dem Wulst eingefassten Einreißbereiches. Der Winkel ist bei einem im Durchmesser kleineren Einreißbereich größer als bei einem im Durchmesser größeren Einreißbereich.

Für die Ausgestaltung der Einfassung der durch Heraustrennen des Einreißbereiches geschaffenen Öffnung durch den vorbeschriebenen Wulst, der sich typischerweise an der äußeren Oberfläche der Weichkunststoffmembran befindet, jedoch in einer bevorzugten Ausgestaltung sowohl außenseitig als auch innenseitig von der Ebene der Weichkunststoffmembran abragend angeordnet ist, dient dieser bei Einführung eines für die Elektroinstallation typischerweise eingesetzten Wellschlauches oder Wellrohres als Installationsrohr zugleich zum Bereitstellen einer Auszugssicherung bzw. einer Fixierung eines solchen Installationsrohres in der geschaffenen Öffnung. Aufgrund der Vorspannung, mit der der durch Einführen des Endabschnittes des Wellschlauches aufgeweitete Wulst an der Außenseite des Wellschlauches anliegt, springt dieser, bedingt durch die Elastizität der Weichkunststoffmembran, in eine Außennut des Wellschlauches oder Wellrohres selbsttätig ein. Der Aufweitprozess des den Einreißbereich einfassenden Wulstes geht aufgrund der Einsteckbewegung des Wellschlauches - Gleiches gilt auch für das Einführen anderer Installationsrohre - mit einer Einstülpung der radial außenseitig zu diesem Wulst befindlichen Bereiche der Weichkunststoffmembran einher. Aus diesem Grunde ist ein Wellschlauch, wenn in eine solche Rohreinführung eingesetzt, durch diese Maßnahme in gewisser Weise verriegelt, da ein Herausziehen desselben aus der aufgeweiteten Weichkunststoffmembranöffnung nur gegen die entgegenwirkenden Kräfte der eingestülpten Weichkunststoffmembranabschnitte möglich ist. Bereits das Einspringen des Wulstes in eine Außennut eines Wellschlauches oder Wellrohres und seine Fixierung darin durch die durch das Aufweiten bewirkte Vorspannung stellt in aller Regel eine ausreichende Winddichtigkeit her. Unterstützt wird dieses zusätzlich durch das Einstülpen der Weichkunststoffmembran, die sodann mit einem Abschnitt umfänglich an der Außenseite des Installationsrohrs zumindest Abschnittsweise ebenfalls unter Vorspannung anliegt. Dieses verbessert die Winddichtigkeit. Um dieses in ausreichendem Maße zu erhalten, ist in einem Ausführungsbeispiel vorgesehen, dass der Durchmesser des Installationsrohres, beispielsweise des Wellschlauches zumindest 35 % größer ist als der Innendurchmesser des den Einreißbereich einfassenden Ringwulstes im nicht aufgeweiteten Zustand. In aller Regel wird man den Durchmesser eines Installationsrohres etwa 40 bis 60 % größer wählen als den Durchmesser des den Einreißbereich einfassenden Wulstes. Eine Bezugnahme zum Durchmesser des Einreißbereiches bzw. der nach Entfernen geschaffenen Öffnung und dem darin einzusetzenden Installationsrohr kann bei kreisrunden Einreißbereichen erfolgen. Bei anderen Konturen wird man vorzugweise den Umfang der von dem Wulst eingefassten Öffnung und den Umfang des Installationsrohres wählen. Der Umfang eines Wellrohres ist typischerweise zumindest 50% größer als der Umfang des von dem Wulst eingefassten Einreißbereiches. Es versteht sich, dass radial außenseitig der Wulst der Weichkunststoffmembran von den die Rohreinführung begrenzenden Bereichen des Dosenkörpers hinreichend beabstandet ist, um das vorbeschriebene Einstülpen der Öffnungsrandbereiche der Weichkunststoffmembran zu ermöglichen. Die lichte Weite - im Falle einer kreisrunden Rohreinführung der Durchmesser - einer Rohreinführung ist typischerweise etwa doppelt so groß oder etwas größer als der Durchmesser eines einzusetzenden Installationsrohres.

In einer anderen Ausgestaltung ist der Einreißbereich von einer kreisrunden Form abweichend ausgeführt, und zwar mit einer Lang- und einer Kurzachse und somit beispielsweise oval oder elliptisch. Die kurze Achse eines solchen von einem Wulst eingefassten Einreißbereiches erstreckt sich quer zur Längserstreckung der Einreißhandhabe. Bei einer solchen Umrissgeometrie des Einreißbereiches ist ein anfängliches Einstecken des Installationsrohres erleichtert. Es versteht sich, dass auch bei einer solchen Ausgestaltung die Langachse des Einreißbereiches kürzer ist als der Durchmesser des darin zu montierenden Installationsrohres. Die unter höherer Vorspannung an der Mantelfläche des Installationsrohres sich bezüglich der Kurzachse der geschaffenen Öffnung gegenüberliegenden Wulstwandungen sorgen bei einer solchen Ausgestaltung für die gewünschte Rückhaltefunktionalität, wobei dennoch umfänglich Sorge für die gewünschte Winddichtigkeit getragen ist.

Eine solche Installationsdose, in die in zumindest in einer Rohreinführung in der vorbeschriebenen Art und Weise ein Installationsrohr, insbesondere ein Wellschlauch eingeführt ist, bildet zusammen mit dem Installationsrohr eine Installationseinheit.

Wenn ein beispielsweise als Wellschlauch ausgeführtes Installationsrohr in die nach Entfernen des Einreißbereiches geschaffene Einführöffnung zu weit in den Dosenkörper eingeschoben worden ist, kann dieses trotz der vorbeschriebenen Rückhaltefunktion durch den Wulst und die Einstülpung durch Aufbringen einer gewissen Kraft wieder herausgezogen werden. Die vorbeschriebene Auszugssicherung dient dem Zweck, ein unbeabsichtigtes Herausziehen des Installationsrohres aus einer solchen Rohreinführung zu vermeiden. Bei dem Vorgang des Herausziehens beispielsweise eines Wellschlauches werden die eingestülpten Bereiche der Weichkunststoffmembran ausgestülpt, so dass dann die Innenseite der Weichkunststoffmembran an der Außenseite des Wellschlauches bereichsweise ebenfalls unter Vorspannung stehend, anliegt. Um einen sicheren Eingriff des Randbereiches der durch Entfernen des Einreißbereiches geschaffenen Öffnung an der Mantelfläche des Wellschlauches zu gewährleisten, ist der den Einreißbereich einfassende Wulst auch innenseitig bezüglich der Oberfläche der Weichkunststoffmembran ausgeprägt. Bei einer solchen Ausgestaltung springt bei einem Ausstülpen der die Öffnung einfassenden Bereiche der Weichkunststoffmembran der Innenwulst in eine Außennut eines Wellschlauches.

Die Erfindung ist nachfolgend anhand eines Ausführungsbeispiels unter Bezugnahme auf die beigefügten Figuren beschrieben. Es zeigen:
- **Fig. 1:**: eine perspektivische Ansicht auf eine als Hohlwanddose ausgebildete Installationsdose mit Blickrichtung auf ihre Rückseite,
- **Fig. 2:**: die Installationsdose der Figur 1 in einer mehr seitlichen perspektivischen Ansicht und ein Wellschlauch als Installationsrohr, das in eine Rohreinführung der Installationsdose eingeführt werden soll,
- **Fig. 3:**: eine vergrößerte Draufsicht auf einen Ausschnitt aus der in Figur 1 gezeigten oberen, durch eine Weichkunststoffmembran überspannten Rohreinführung,
- **Fig. 4:**: eine Schnittdarstellung eines Ausschnittes der Installationsdose mit dem Installationsrohr in einem ersten Schritt zum Einführen desselben,
- **Fig.5:**: eine Detaildarstellung der Installationsdose mit dem in eine Rohreinführung eingesetzten Installationsrohr in einer ersten Einsetzstellung,
- **Fig. 6:**: eine Darstellung entsprechend derjenigen der Figur 5 mit dem Installationsrohr in einer zweiten Einsetzstellung und
- **Fig. 7:**: eine Draufsicht auf einen Ausschnitt einer weiteren, eine Rohreinführung überspannenden Weichkunststoffmembran.

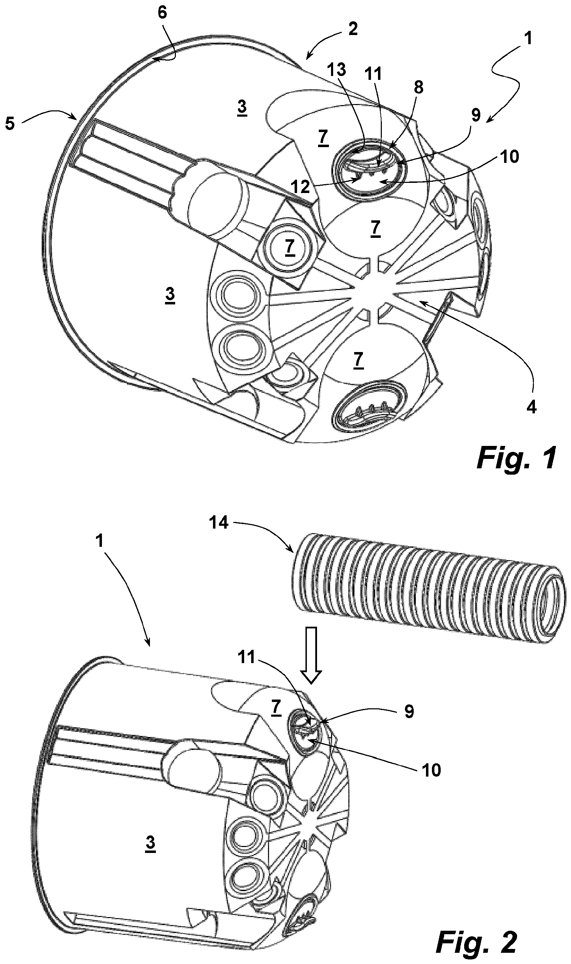

Eine Hohlwanddose 1 als beispielhafte Installationsdose zur Aufnahme von elektrischen/elektronischen Installationsgeräten, wie etwa einer Steckdose, eines Geräteträgers, einer Schalteinrichtung oder dergleichen umfasst einen Dosenkörper 2. Bei dem dargestellten Ausführungsbeispiel wird der Dosenkörper 2 durch eine umlaufende zylindrische Wand 3 und einen Boden 4 gebildet. Dem Boden 4 gegenüberliegend verfügt der Dosenkörper 2 über eine in Figur 1 auf Grund der Perspektive nicht erkennbare Montageöffnung 5, durch die die gewünschten Installationen in die Hohlwanddose 1 eingebracht werden können. An den Dosenkörper 2 ist, die Montageöffnung 5 einfassend, in radialer Richtung nach außen ein Stützflansch 6 angeformt. Der Dosenkörper 2, soweit vorstehend beschrieben, ist aus einem Hartkunststoff, typischerweise aus einem thermoplastischen Kunststoff hergestellt. Dieser stellt zugleich die notwendige elektrische Isolierung zwischen dem Innenraum des Dosenkörpers 2 und seiner Außenseite dar. Der Boden 4, wozu auch der geneigte, den Boden 4 mit der Seitenwand 3 verbindende Abschnitt zählt, verfügt über mehrere, als Durchbrechungen in den Dosenkörper 2 eingebrachte Rohreinführungen. Diese sind in Figur 1 nicht erkennbar, da jeweils von einer Weichkunststoffmembran überspannt. In Figur 1 sind nur einige der mehreren, eine Rohreinführung überspannenden Weichkunststoffmembranen mit dem Bezugszeichen 7 kenntlich gemacht. Aus herstellungstechnischen Gründen sind die Weichkunststoffmembranen 7 über Angusskanäle miteinander verbunden. Bei dem Weichkunststoff und den von diesem gebildeten Weichkunststoffmembranen 7 handelt es sich um einen elastomeren Weichkunststoff, wie dieser bei Installationsdosen der in Rede stehenden Art bekannt ist. Die Hohlwanddose 1 ist als Zweikomponentenspritzgussteil gefertigt. In einem ersten Schritt ist der aus Hartkunststoff bestehende Dosenkörper 2 urgeformt worden. In einem nachfolgenden Schritt ist die Weichkunststoffkomponente an den Dosenkörper 2 in einem entsprechenden Werkzeug angeformt worden.

Von Interesse sind im Rahmen dieser Ausführungen diejenigen Weichkunststoffmembranen 7, die etwa im Bereich der Mitte der Rohreinführung in dem Dosenkörper 2 einen nach außen gerichteten Wulst und eine in dem von dem Wulst 8 eingefassten Bereich der Weichkunststoffmembrane 7 eine Einreißhandhabe 9 aufweisen. Die Ausdehnung der durch die Weichkunststoffmembran 7 überspannten Rohreinführung in dem Dosenkörper 2 entspricht bei der in Figur 1 oberen, die Einreißhandhabe 9 tragenden Weichkunststoffmembran 7 in etwa ihrer in dieser Figur gezeigten Ausdehnung.

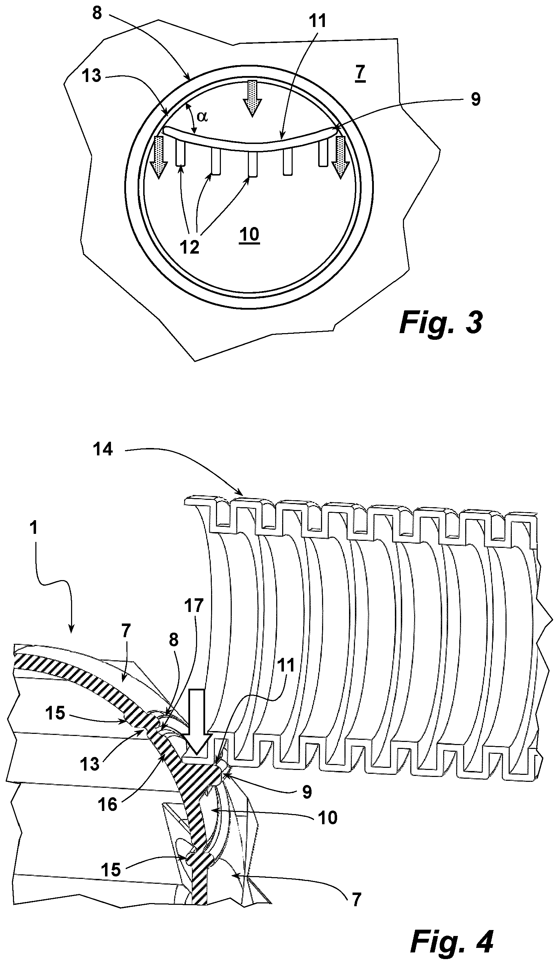

Der von dem Wulst 8 eingefasste Bereich der Weichkunststoffmembran 7 stellt einen Einreißbereich 10 dar, der aus der Weichkunststoffmembran 7 herausgetrennt wird, bevor durch die dann geschaffene Öffnung ein Installationsrohr, etwa ein Wellschlauch in die geschaffene Öffnung eingesteckt wird. Zum definierten Heraustrennen des von dem Wulst 8 eingefassten Einreißbereiches 10 dient die Einreißhandhabe 9. Diese ist bei dem dargestellten Ausführungsbeispiel als an den Einreißbereich 10 angeformter und von diesem abragender Steg ausgeführt. Die in Figur 1 sichtbare Oberseite der Einreißhandhabe 9 wird durch eine Betätigungsfläche 11 gebildet. Die Einreißhandhabe 9 ist mit ihrer Betätigungsfläche 11 konkav gekrümmt, wobei diese Krümmung an den Krümmungsradius eines durch die Weichkunststoffmembran 7 einzuführenden Installationsrohres angepasst ist. Unterseitig ist die Einreißhandhabe 9 durch mehrere Stützrippen 12 an der Oberfläche des Einreißbereiches 10 abgestützt. Unmittelbar innenseitig an den Wulst 8 angrenzend ist bei diesem Ausführungsbeispiel eine durch eine Materialverdünnung gegenüber der Materialstärke des übrigen Einreißbereiches 10 bereitgestellte Einreißkontur 13 bereitgestellt (siehe auch Figur 4). Die Materialstärke im Bereich der Einreißkontur beträgt bei dem dargestellten Ausführungsbeispiel etwa 0,5 mm. In den angrenzenden Bereichen des Einreißbereiches 10 beträgt die Materialstärke etwa 1,5 bis 2 mm.

Die konkave Krümmung der als Steg ausgeführten Einreißhandhabe 9 befindet sich außermittig bezüglich des von dem Wulst 8 eingefassten Einreißbereiches 10 (siehe Figur 3). Gegenüber einer mittigen Anordnung ist die Einreißhandhabe 9 außermittig in denjenigen Abschnitt des Einreißbereiches 10 versetzt, in den die konkave Kontur der Einreißhandhabe 9 weist. Erreicht wird hierdurch, dass die Krümmung der Einreißhandhabe 9 gegensinnig zur Krümmung der Einreißkontur 13 verläuft. Die Einreißhandhabe 9 erstreckt sich bis an die Einreißkontur 13 heran. Die seitlichen Abschlüsse der Einreißhandhabe 9 gehen bei dem dargestellten Ausführungsbeispiel unmittelbar in die durch Materialverdünnung gebildete Einreißkontur 13 über. Der Winkel a, den die Einreißhandhabe 9 im Bereich ihrer seitlichen Abschlüsse mit der Einreißkontur 13 einschließt beträgt bei dem dargestellten Ausführungsbeispiel, bei dem die durch den Einreißbereich 10 überspannte Öffnung zum Einführen eines Installationsrohres mit einem Durchmesser von 20 mm vorgesehen ist, etwa 40 bis 45 Grad.

Nachfolgend ist der Vorgang einer Entfernung des Einreißbereiches 10 aus der Weichkunststoffmembran 7 erläutert. Als Werkzeug dient bei dem in Figuren 2 und 4 gezeigten Vorgang ein Wellschlauch 14, der bei diesem Ausführungsbeispiel das in den Dosenkörper 2 mit seinem Endabschnitt einzuführende Installationsrohr darstellt. Zum Entfernen, das heißt: Ausreißen des Einreißbereiches 10 wird der Endabschnitt des Wellschlauches 14 auf die Betätigungsfläche 11 der Einreißhandhabe 9 zur Anlage gebracht, wie dieses in Figur 2 durch den Blockpfeil kenntlich gemacht ist. Die Anlagesituation zwischen dem Wellschlauch 14 und der Einreißhandhabe 9 ist aus der Schnittdarstellung der Figur 3 erkennbar, in der der Endabschnitt des Wellschlauches 14 auf der Betätigungsfläche 11 der Einreißhandhabe 9 aufliegt.

Figur 3 lässt aufgrund der Schnittdarstellung den außenseitig von der Weichkunststoffmembran 7 abragenden Wulst 8 deutlich erkennen. Diese Wulstausprägung befindet sich nicht nur an der Außenseite der Weichkunststoffmembran 7, sondern auch an der zum Doseninneren weisenden Seite. Der Innenwulst ist in dieser Figur mit dem Bezugszeichen 15 kenntlich gemacht. Deutlich erkennbar ist in dieser Schnittdarstellung auch die Einreißkontur 13, die an die radiale Innenseite der Wulstausprägung, gebildet aus den Wülsten 8, 15, angeformt ist und sich durch eine Materialausdünnung gegenüber der Materialstärke des Einreißbereiches 10 auszeichnet.

Zum Heraustrennen des Einreißbereiches 10 wird der Wellschlauch 14 gegen die Betätigungsfläche 11 der Einreißhandhabe 9 gedrückt, wie durch den Blockpfeil in der Figur 3 angedeutet. Die auf die Einreißhandhabe 9 wirkende Kraft wird über diese auf Grund ihrer Erstreckung bis an die Einreißkontur 13 im Bereich der seitlichen Abschlüsse der Einreißhandhabe 9 in die Einreißkontur 13 unmittelbar eingeleitet. Damit wird im Bereich der seitlichen Abschlüsse der Einreißhandhabe 9 in die Einreißkontur 13 eine Scherkraft eingeleitet. Zugleich wird durch die Kraftbeaufschlagung auf die Einreißhandhabe 9 bewirkt, dass auf den in Figur 3 oberhalb der Einreißhandhabe 9 befindlichen Abschnitt 16 des Einreißbereiches 10 eine Zugkraft wirkt. Da die Weichkunststoffmembran 7 elastisch ist, erfährt diese an derjenigen Stelle die größte Längung, an der die geringste Materialstärke vorhanden ist, mithin in der Einreißkontur 13. Die Materialausdünnung der Einreißkontur 13 ist so ausgelegt, dass bei einer vorgegebenen, auf die Betätigungsfläche 11 der Einreißhandhabe 9 wirkenden Kraft die Einreißkontur auf Grund der in diese über die Einreißhandhabe 9 eingeleiteten Scher- und Zugkräfte definiert einreißt. Die Zugkraft wirkt auf den oberen Scheitel 17 der Einreißkontur, mithin denjenigen Abschnitt der Einreißkontur 13, der dem Scheitel der konkaven Krümmung der Betätigungsfläche 11 gegenüber liegt. Durch das geschickte Einleiten von Scherkräften beiderseits zu dem Scheitel 17 in die Einreißkontur 13, bedingt durch die Erstreckung der Einreißhandhabe 9, ist bei einer Krafteinleitung in die Einreißkontur 13 im Bereich des Scheitels 17 sehr genau definiert, dass eine Rissinitiierung in dem Abschnitt der Einreißkontur 13 erfolgt, der die seitlichen Abschlüsse der Einreißhandhabe 9 überspannt. Dabei bewirkt das Einleiten der Scherkräfte in die Einreißkontur 13 eine Richtungskomponente, die in Richtung des Verlaufs der Einreißkontur 13 weist (siehe Figur 3), so dass eine Rissfortpflanzung bereits durch die Einreißbewegung vorgegeben ist, selbstverständlich unterstützt von dem Verlauf der Einreißkontur 13. Durch diese Maßnahme ist wirksam einer Rissausbreitung durch den die Einreißkontur 13 begrenzenden Wulst 8 vermieden. In dem Abschnitt des Einreißbereiches 10 unterhalb der Einreißhandhabe 9 wird der Einreißprozess durch die aufgrund der Kraftausübung eingehende Stauchung und die in den zwischen den beiden gegenüberliegenden Scheiteln stattfindende Scherung unterstützt. Ist der Riss umfänglich zum Einreißbereich 10 ausgebildet oder hat sich zumindest so weit fortgepflanzt, dass der Einreißbereich 10 in das Innere des Dosenkörpers 2 eingeklappt werden kann, kann der Wellschlauch 14 durch die geschaffene Öffnung durch Weichkunststoffmembrane 7 hindurchgesteckt und damit durch die Rohreinführung des Dosenkörpers 2 hindurchgeführt werden. Dieses Einführen geht mit einer Aufweitung der Wulstausprägung 8, 15 und einem Einstülpen der radial außenseitig an die Wulstausprägung 8, 15 angrenzenden Bereiche der Weichkunststoffmembrane 7 einher. Der in die auf diese Weise geschaffene Öffnung in der Weichkunststoffmembrane 7 eingesteckte Wellschlauch 14 ist in Figur 4 gezeigt. Der Außendurchmesser des Wellschlauches 14 ist bei dem dargestellten Ausführungsbeispiel etwa doppelt so groß wie der Innendurchmesser der Wulstausprägung 8, 15 in nicht deformiertem Zustand. Dieses bedingt, dass bei der in Figur 4 gezeigten Stellung von Hohlwanddose 1 und Wellschlauch 14 der außenseitige Wulst 8 nach Art eines O-Ringes unter Vorspannung stehend in eine Außennut 18 des Wellschlauches 14 eingreift und darin verrastet gehalten ist. Aufgrund der vorbeschriebenen Durchmesserunterschiede liegt ebenfalls unter Vorspannung an der Außenseite des Wellschlauches 14 die radial außenseitig bezüglich der Wulstausprägung 8, 15 liegenden Bereiche der Weichkunststoffmembrane 7 an. Durch dieses Einstülpen der Weichkunststoffmembrane 7 bei der Einführung des Wellschlauches 14 ist eine Dichtmanschette gebildet, durch die eine Winddichtigkeit zwischen dem Doseninneren und dem Dosenäußeren trotz eingeführtem Wellschlauch 14 gewährleistet ist.

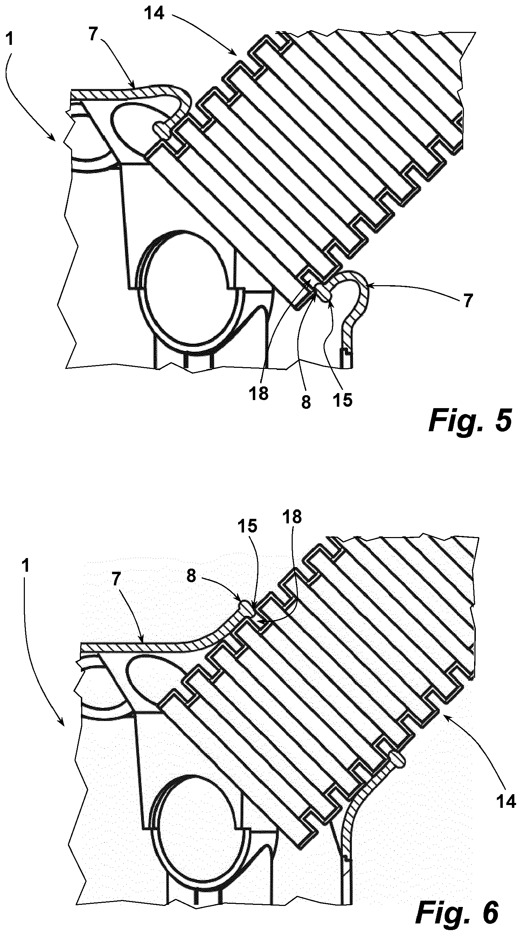

Figur 5 zeigt in einer weiteren Stellung einen zunächst zu tief in die Hohlwanddose 1 eingeschobenen Wellschlauch 14, der bereits wieder etwas aus der Hohlwanddose 1 bzw. dem Dosenkörper 2 herausgezogen ist. Bei dem Herausziehen des Wellschlauches 14 haben sich die beim Einschieben zunächst eingestülpten Wandbereiche der Weichkunststoffmembrane 7 ausgestülpt, so dass nunmehr die Innenseite der an die Wulstausprägung 8, 15 angrenzenden Bereiche der Weichkunststoffmembrane 7 an der Außenseite des Wellschlauches 14 anliegen. In dieser Stellung ist der Innenwulst 15 in einer Außennut 18 des Wellschlauches 14 verrastet. Die Winddichtigkeit ist auch in dieser Stellung zwischen dem Doseninneren und dem Dosenäußeren gewährleistet.

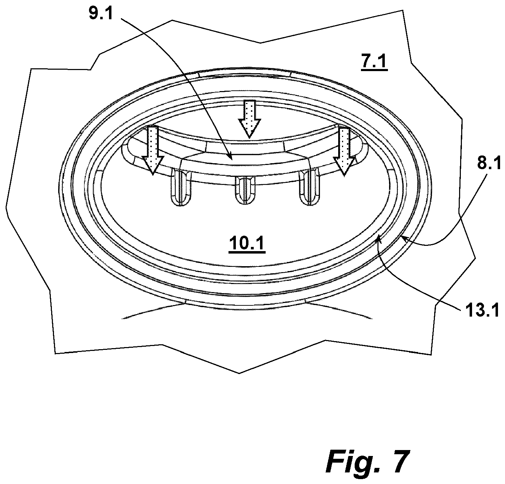

Figur 7 zeigt in einer Draufsicht entsprecht derjenigen der Figur 3 einen Ausschnitt aus einer weiteren eine Rohreinführung überspannenden Weichkunststoffmembran 7.1, der Einreißbereich 10.1 im Unterschied zu dem vorbeschriebenen Ausführungsbeispiel elliptisch ausgeführt ist. Die Einreißhandhabe 9.1 erstreckt sich mit ihrer Längserstreckung quer zur Kurzachse des elliptischen Einreißbereiches 10.1. Der Einreißbereich 10.1 ist auch bei diesem Ausführungsbeispiel von einem umlaufenden beidseitig ausgeprägten Wulst 8.1 und einer innenseitig daran angeformten Einreißkontur 13.1 eingefasst. Die Ausführungen zu dem Ausführungsbeispiel der Figuren 1 bis 6 gelten gleichermaßen für die Ausgestaltung des Einreißbereiches 10.1 der Figur 7. Bei dieser Ausgestaltung ist der Durchmesser des Installationsrohres etwas größer als die Langachse des Einreißbereiches 10.1. Die Kurzachse ist hingegen deutlich kleiner als der Durchmesser eines in die durch Entfernen des Einreißbereiches 10.1 geschaffene Öffnung in der Weichkunststoffmembran 7.1. Hierdurch ist ein Einschieben eines insbesondere als Wellrohr ausgeführten Installationsrohres vereinfacht. Die einander gegenüber liegenden Wulstwandungen springen nach Entfernen des Einreißbereiches 10.1 in ein Wellental eines als Wellrohr ausgeführten Installationsrohres ein und sorgen für die notwendige Rückhaltefunktion.

Die Erfindung ist anhand eines Ausführungsbeispiels beschrieben worden. Ohne den Umfang der geltenden Ansprüche zu verlassen, ergeben sich für einen Fachmann zahlreiche weitere Möglichkeiten die Erfindung umzusetzen, ohne dass dieses im Rahmen dieser Ausführungen im Einzelnen dargelegt werden müsste.

### Bezugszeichenliste

- 1: Hohlwanddose
- 2: Dosenkörper
- 3: Wand
- 4: Boden
- 5: Montageöffnung
- 6: Stützflansch
- 7,7.1: Weichkunststoffmembran
- 8,8.1: Wulst
- 9,9.1: Einreißhandhabe
- 10,10.1: Einreißbereich
- 11: Betätigungsfläche
- 12: Stützkörper
- 13,13.1: Einreißkontur
- 14: Wellschlauch
- 15: Innenwulst
- 16: Abschnitt
- 17: Scheitel
- 18: Außennut

- α: Winkel

## Patentansprüche

1. Installationsdose für elektrische/elektronische Installationen mit einem zur Aufnahme zumindest einer elektrischen/elektronischen Komponente dienenden Dosenkörper (2), umfassend einen Boden (4), eine umlaufende Wand (3) und eine Montageöffnung (5), welcher Dosenkörper (2) wenigstens eine mit einer Weichkunststoffmembran (7, 7.1) überspannte Rohreinführung zum Einführen des Endabschnittes eines Installationsrohres aufweist, wobei die Weichkunststoffmembran (7, 7.1) an einer für die Einführung des Installationsrohres vorgesehenen Position einen durch Materialverdickung gebildeten Wulst (8, 8.1) und einen durch eine Einreißkontur und den Wulst eingefassten Einreißbereich (10, 10.1), der durch die Einreißkontur (13, 13.1) entfernt wird, aufweist, welcher Einreißbereich (10, 10.1) in Verwendung einer Querschnittsfläche, die kleiner ist als die Querschnittsfläche des darin einzuführenden Installationsrohres aufweist, und eine Einreißhandhabe (9, 9.1) zum Entfernen des Einreißbereiches (10, 10.1) trägt, wobei die Einreißhandhabe (9, 9.1) als Steg mit einer konkav gekrümmten Betätigungsfläche (11) ausgeführt ist, wobei die Einreißhandhabe (9, 9.1) zum Empfangen einer zum Einreißenlassen der Einreißkontur (13, 13.1) quer zu diesem angreifenden Einreißkraft ausgeführt ist, **dadurch gekennzeichnet, dass** die Einreißkontur durch eine Materialverdünnung bereitgestellt ist und dass die Betätigungsfläche (11) der Einreißhandhabe (9, 9.1) außermittig bezüglich des von dem Wulst (8, 8.1) eingefassten Einreißbereiches (10, 10.1) in denjenigen Abschnitt des Einreißbereiches (10, 10.1) versetzt, in den die konkave Kontur der Einreißhandhabe (9, 9.1) weist, angeordnet ist und sich die Einreißhandhabe (9) bis an die Einreißkontur (13, 13.1) heran erstreckt und dass der Steg an seiner der Betätigungsfläche (11) gegenüberliegenden Seite über wenigstens eine Abstützstruktur an der äußeren Oberfläche des Einreißbereiches (10, 10.1) der Weichkunststoffmembran (7, 7.1) abgestützt ist.

2. Installationsdose nach Anspruch 1, **dadurch gekennzeichnet, dass** die beiden seitlichen Endabschnitte der Einreißhandhabe (9, 9.1) an ihrer konvex gekrümmten Seite mit der Einreißkontur (9, 9.1) einen Winkel von zumindest 35 Grad einschließen.

3. Installationsdose nach Anspruch 1 oder 2, **dadurch gekennzeichnet, dass** mehrere als Stützrippen (12) ausgeführte Abstützstrukturen vorgesehen sind.

4. Installationsdose nach einem der Ansprüche 1 bis 3, **dadurch gekennzeichnet, dass** die Einreißkontur (13, 13.1) eine geringere Materialstärke aufweist, als der Einreißbereich (10, 10.1) der Weichkunststoffmembran (7, 7.1).

5. Installationsdose nach einem der Ansprüche 1 bis 4, **dadurch gekennzeichnet, dass** der die Einreißkontur (13, 13.1) begrenzende Wulst eine Wulstausprägung aufweist, die außen- und innenseitig bezüglich des Dosenkörpers (2) vorgesehen ist.

6. Installationseinheit mit einer Installationsdose (1) nach einem der Ansprüche 1 bis 5 mit wenigstens einer mit einer Weichkunststoffmembran (7, 7.1) überspannten Rohreinführung und mit einem in zumindest eine Rohreinführung der Installationsdose (1) einzuführenden Installationsrohr, **dadurch gekennzeichnet, dass** die Querschnittsfläche des durch die Einreißkontur (13, 13.1) eingefassten Einreißbereiches (10, 10.1) kleiner ist als die Querschnittsfläche des darin einzuführenden Installationsrohres.

7. Installationseinheit nach Anspruch 6, **dadurch gekennzeichnet, dass** der Umfang der Rohreinführung des Dosenkörpers (2) größer ist als der Umfang eines darin einzuführenden Installationsrohres.

8. Verfahren zur Installation der Installationseinheit nach Anspruch 7 in Abhängigkeit von Anspruch 6, **dadurch gekennzeichnet, dass** das Installationsrohr ein Wellrohr oder Wellschlauch (14) ist und beim Einführen des Wellrohres oder des Wellschlauches in die Rohreinführung der die Einreißkontur (13) begrenzende Wulst (8) in einer Außennut (18) des Wellrohres oder des Wellschlauches (14) eingreift und die Weichkunststoffmembran (7) mit einem radial außenseitig zu dem Wulst (8) befindlichen Flächenbereich an dem zu dieser Außennut (18) benachbarten Außenabschnitt anliegt.

9. Verfahren nach Anspruch 8, **dadurch gekennzeichnet, dass** der die Einreißkontur (13) begrenzende Wulst (8) als kreisrunder Ringwulst ausgeführt ist, das Wellrohr oder der Wellschlauch (14) eine kreisförmige Mantelfläche aufweist und der Umfang der Mantelfläche des Wellrohres oder des Wellschlauches (14) zumindest 35 %, insbesondere mehr als 55 % größer ist als der Innenumfang des Wulstes (8).

## Claims

1. Installation box for electrical/electronic installations, with a box body (2) serving to accommodate at least one electrical/electronic component, comprising a base (4), a surrounding circumferential wall (3), and a mounting opening (5), said box body (2) comprising at least one pipe inlet, spanned by a soft plastic membrane (7, 7.1) for introducing the end section of an installation pipe, wherein the soft plastic membrane (7, 7.1) comprises, at a position provided for the introduction of the installation pipe, a beading (8, 8.1) formed by a material covering, and an insertion region (10, 10.1) enclosed by an insertion contour and by the beading, which is separated from the insertion contour (13, 13.1), said region (10, 10.1), when in use, comprises a cross-section surface which is smaller than the cross-section surface of the installation pipe which is to be introduced, and carries an insertion handle (9, 9.1) for removing the insertion region (10, 10.1), wherein the insertion handle (9, 9.1) is configured as a web with a concave cambered actuation surface (11), wherein the insertion handle (9, 9.1) is configured to receive an insertion force for introducing the insertion contour (13, 13.1) engaging transversely, **characterised in that** the insertion contour is provided by a thinning of material, and that the actuation surface (11) of the insertion handle (9, 9.1) is offset eccentrically, in relation to the insertion region (10, 10.1) enclosed by the beading (8, 8.1), into that section of the insertion region (10, 10.1) towards which the concave contour of the insertion handle (9, 9.1) faces, and the insertion handle (9) extends as far as the insertion contour (13, 13.1), and that the web is supported, on its side opposite the actuation surface (11), by at least one support structure on the outer surface of the insertion region (10, 10.1) of the soft plastic membrane (7, 7.1).

2. Installation box according to claim 1, **characterised in that** the two side end sections of the insertion handle (9, 9.1), on its convex cambered side, enclose an angle with the insertion contour (9, 9.1) of at least 35 degrees.

3. Installation box according to claim 1 or 2, **characterised in that** several support structures are provided, configured as support ribs (12).

4. Installation box according to any one of claims 1 to 3, **characterised in that** the insertion contour (13, 13.1) exhibits a lesser material thickness than the insertion region (10, 10.1) of the soft plastic membrane (7, 7.1).

5. Installation box according to any one of claims 1 to 4, **characterised in that** the beading delimiting the insertion contour (13, 13.1) comprises a beading projection, which is provided on the outside and inside in relation to the installation box (2).

6. Installation unit with an installation box (1) according to any one of claims 1 to 5, with at least one pipe inlet spanned over by a soft plastic membrane (7, 7.1), and with an installation pipe introduced into at least one pipe inlet of the installation box (1), **characterised in that** the cross-section surface of the insertion region (10, 10.1) introduced through the insertion contour (13, 13.1) is smaller than the cross-section surface of the installation pipe to be introduced into it.

7. Installation box according to claim 6, **characterised in that** the circumference of the pipe inlet of the box body (2) is greater than the circumference of the installation pipe which is to be introduced into it.

8. Method for the installation of the installation unit according to claim 7, as a dependency of claim 6, **characterised in that** the installation pipe is a shaft pipe or shaft hose (14), and, at the introduction of the shaft pipe or the shaft hose into the pipe inlet of the beading (8) delimiting the insertion contour (13), it engages into an external groove (18) of the shaft pipe or the shaft hose (14), and the soft plastic membrane (7) is in contact with a surface region located radially outside in relation to the beading (8) at the outer section adjacent to this external groove (18).

9. Method according to claim 8, **characterised in that** the beading (8) delimiting the insertion contour (13) is configured as circular ring beading, the shaft pipe or shaft hose (14) has a circular encasing surface, and the circumference of the encasing surface of the shaft pipe or the shaft hose (14) is at least 35 % larger, and in particular more than 55 % larger, than the inner circumference of the beading (8).

## Revendications

1. Boîte d'installation pour des installations électriques/électroniques avec un corps de boîte (2) destiné à recevoir au moins un composant électrique/électronique, comportant un fond (4), une paroi (3) périphérique et une ouverture de montage (5), lequel corps de boîte (2) présente au moins un engagement de tuyau, recouvert d'une membrane (7, 7.1) en matière plastique souple, destiné à engager le tronçon d'extrémité d'un tuyau d'installation, laquelle membrane (7, 7.1) en matière plastique souple présente, dans une position prévue pour l'engagement du tuyau d'installation, un bourrelet (8, 8.1) formé par un épaississement du matériau et une zone d'arrachage (10, 10.1) sertie par un contour d'arrachage et par le bourrelet, laquelle est enlevée par le contour d'arrachage (13, 13.1), laquelle zone d'arrachage (10, 10.1) présente lors de l'utilisation, une surface de section transversale plus petite que la surface de section transversale du tuyau d'installation à y engager, et supporte une tirette d'arrachage (9, 9.1) pour retirer la zone d'arrachage (10, 10.1), laquelle tirette d'arrachage (9, 9.1) étant conformée en tant que languette avec une surface de manipulation (11) courbée de manière concave, laquelle tirette d'arrachage (9, 9.1) étant conformée pour réceptionner une force d'arrachage s'exerçant perpendiculairement à celle-là, afin de provoquer l'arrachage du contour d'arrachage (13, 13.1), **caractérisée en ce que** le contour d'arrachage est mis à disposition à travers un amincissement du matériau et que la surface de manipulation (11) de la tirette d'arrachage (9, 9.1) est placée de manière excentrée par rapport à la zone d'arrachage (10, 10.1) sertie par le bourrelet (8, 8.1) dans ce tronçon de la zone d'arrachage (10, 10.1) vers lequel est orienté le contour concave de la tirette d'arrachage (9, 9.1) et que la tirette d'arrachage (9) s'étend jusqu'au contour d'arrachage (13, 13.1) et que la languette est, sur son côté opposé à la surface de manipulation (11), en appui par au moins une structure d'appui sur la surface extérieure de la zone d'arrachage (10, 10.1) de la membrane (7, 7.1) en matière plastique souple.

2. Boîte d'installation selon la revendication 1, **caractérisée en ce que** les deux tronçons d'extrémité latéraux de la tirette d'arrachage (9, 9.1) englobent sur leur côté courbé de manière convexe, un angle d'au moins 35 degrés avec le contour d'arrachage (9, 9.1).

3. Boîte d'installation selon l'une des revendications 1 ou 2, **caractérisée en ce que** plusieurs structures d'appui conformées en tant qu'ailettes d'appui (12) sont prévues.

4. Boîte d'installation selon l'une des revendications 1 à 3, **caractérisée en ce que** le contour d'arrachage (13, 13.1) présente une épaisseur de matériau plus faible que la zone d'arrachage (10, 10.1) de la membrane en matière plastique souple (7, 7.1).

5. Boîte d'installation selon l'une des revendications 1 à 4, **caractérisée en ce que** le bourrelet délimitant le contour d'arrachage (13, 13.1) présente une forme de bourrelet qui est prévue du côté extérieur et du côté intérieur par rapport au corps de boîte (2).

6. Unité d'installation comportant une boîte d'installation (1) selon l'une des revendications 1 à 5, avec au moins un engagement de tuyau recouvert d'une membrane (7, 7.1) en matière plastique souple et avec un tuyau d'installation à engager dans au moins un engagement de tuyau de la boîte d'installation (1), **caractérisée en ce que** la surface de section transversale de la zone d'arrachage (10, 10.1) sertie par le contour d'arrachage (13, 13.1) est plus petite que la surface de section transversale du tuyau d'installation à y engager.

7. Unité d'installation selon la revendication 6, **caractérisée en ce que** la dimension de l'engagement de tuyau du corps de boîte (2) est plus grande que la dimension du tuyau d'installation qui y sera engagé.

8. Procédé d'installation de l'unité d'installation selon la revendication 7 en relation avec la revendication 6, **caractérisé en ce que** le tuyau d'installation est un tuyau annelé ou un flexible annelé (14) et que lors de l'engagement du tuyau annelé ou du flexible annelé dans l'engagement de tuyau, le bourrelet (8) délimitant le contour d'arrachage (13) s'engage dans une annelure extérieure (18) du tuyau annelé ou du flexible annelé (14) et que la membrane (7) en matière plastique souple est au contact par une surface se trouvant radialement à l'extérieur par rapport au bourrelet (8) contre le tronçon extérieur au voisinage de cette annelure extérieure (18).

9. Procédé selon la revendication 8, **caractérisé en ce que** le bourrelet (8) délimitant le contour d'arrachage (13) est conformé en bourrelet circulaire de forme ronde, que le tuyau annelé ou le flexible annelé (14) présente une surface d'enveloppe de forme circulaire et que la dimension de la surface d'enveloppe du tuyau annelé ou du flexible annelé (14) est plus grande d'au moins 35 % et notamment de plus de 55 % par rapport à la dimension intérieure du bourrelet (8).
